# EUROPÄISCHE PATENTSCHRIFT

(11) **EP 2 444 451 B1**
(45) Veröffentlichungstag und Bekanntmachung des Hinweises auf die Patenterteilung: **07.12.2016**
(21) Anmeldenummer: 11184980.8
(22) Anmeldetag: 13.10.2011
(51) Int. Cl.: C08J 3/28, H01Q 13/00, B29C 70/06, H01Q 9/40, H01Q 13/08, B29C 35/02, B29C 35/08, H01Q 1/36, B29C 70/38, B29K 105/08

(54) **VERFAHREN ZUR ERWÄRMUNG EINES FASER-KUNSTSTOFF-VERBUNDWERKSTOFFES**
METHOD FOR HEATING A FIBRE-PLASTIC COMPOUND MATERIAL
PROCÉDÉ DE CHAUFFAGE D'UN COMPOSITE EN MATIÈRE SYNTHÉTIQUE FIBREUSE

(30) Priorität: 22.10.2010 DE 102010042820
(43) Veröffentlichungstag der Anmeldung: 25.04.2012
(60) Teilanmeldung: 12181969.2
(73) Patentinhaber: Fraunhofer-Gesellschaft zur Förderung der angewandten Forschung e.V., 80686 München (DE)
(72) Erfinder: Ress, Christian, 75045 Walzbachtal (DE); Emmerich, Rudolf, 76456 Kuppenheim (DE); Graf, Matthias, 76327 Pfinztal (DE); Urban, Helfried, 75015 Bretten (DE); Bräuning, Rüdiger, 76703 Kraichtal (DE)
(74) Vertreter: Lux, Berthold

(56) Entgegenhaltungen:
- US-A- 4 819 003
- US-A- 5 798 395
- US-A- 5 804 801
- Brian B. Balzer ET AL: "Significant Effect of microwave Curing on Tensile Strength of carbon Fiber Composites", Journal of Industrial technology, Volume 24, Number 3, July 2008 through September 2008, 1. Januar 2008 (2008-01-01), Seiten 1-9, XP55018637, Gefunden im Internet: URL:http://atmae.org/jit/Articles/balzer06 1608.pdf [gefunden am 2012-02-07]

## Beschreibung

Die vorliegende Erfindung betrifft ein neues Verfahren zur Erwärmung eines Faser-Kunststoff-Verbundwerkstoffes, sowie eine Mikrowellenantenne die für dieses Verfahren eingesetzt werden kann.

Kohlenstofffasern finden als Verstärkungsfasern in Hochleistungskunststoffen Verwendung. Als Matrixmaterialien werden in der Regel thermoplastische als auch duroplastische Polymere verwendet, die unter Wärmeeintrag aufgeschmolzen oder vernetzt werden. Polymere sind schlechte Wärmeleiter, so dass es lange dauert, bis die entsprechende Temperatur über Wärmeleitung oder Konvektion erreicht wird.

Mikrowellen eignen sich absorbierende Materialien unabhängig der Wärmeleitung zu erwärmen. Jedoch sind Kohlestofffasern elektrisch leitfähig und schirmen im Allgemeinen Mikrowellen ab. Nur Kohlenstofffasern die vorwiegend uni-direktional verlaufen, können bisher mit Mikrowellen gut erwärmt werden.

Bisher gab es für dieses Problem keine spezifische Lösung. Bekannt ist Kohlenstofffaser verstärkte Kunststoffe mit Mikrowellen in einem Mikrowellenofen, sogenannter Multimode, zu erwärmen. Nachteil dieses Vorgehens ist es, dass in konventionellen Mikrowellenöfen sehr viele unterschiedliche Richtungen des elektrischen bzw. magnetischen Feldes vorhanden sind. Somit weist nur ein kleiner Teil der magnetischen Felder eine Richtung auf, die die Erwärmung des Faser-Kunststoff-Verbundwerkstoffes ermöglicht. Darüber hinaus kommt es zu Abschirmungseffekten der elektrischen bzw. magnetischen Felder was zusätzlich die Effektivität bekannter Vorrichtungen minimiert. Dadurch beobachtet man bei herkömmlichen Mikrowellenöfen eine starke Erwärmung des Randes der Faser-Kunststoff-Verbundwerkstoffe, wobei die Mitte des Bauteils relativ kalt bleibt. Dies wurde mithilfe von sogenannten thermoelektrischen Folien gemildert. Diese Folien werden auf die Faser-Kunststoff-Verbundwerkstoffe gelegt und heizen sich durch die Absorption von Mikrowellen auf und erwärmen dadurch indirekt die Struktur.

Aufgabe ist es demnach ein Verfahren bereitzustellen, das die oben bezeichneten Probleme beseitigt. Es ist insbesondere Aufgabe der vorliegenden Anmeldung ein Verfahren bereitzustellen Faser-Kunststoff-Verbundwerkstoffe direkt mittels Mikrowellenenergie effektiv zu erwärmen.

US 5,804,801 A und US 5,798,395 A beschreiben Verfahren zur Verklebung mehrerer Komponenten mit adhäsiven Polymeren, durch Bestrahlung von Mikrowellen mit veränderlicher Frequenz.

US 4,819,003 A beschreibt eine kreisförmige, unidirektionale Mikrowellenantenne für Telekommunikationsanwendungen.

Erkenntnis der vorliegenden Erfindung ist es, dass das magnetische Feld so zur Ebene der Faserstruktur des Faser-Kunststoff-Verbundwerkstoffes ausgerichtet wird, dass ein elektrischer Strom senkrecht zur Ebene induziert wird.

Demnach richtet sich die vorliegenden Erfindung auf ein Verfahren zur Erwärmung eines Faser-Kunststoff-Verbundwerkstoffes (FKV) umfassend mindestens eine Lage (L) aus Kohlenstofffasern (F) in einer Kunststoffmatrix (K) wobei mittels Mikrowellenantenne (MA) ein magnetisches Feld (MF) induziert wird und die Feldrichtung des magentischen Feldes (MF) in der Ebene der Lage (L) aus Kohlenstofffasern (F) verläuft, dadurch gekennzeichnet, dass die Mikrowellenantenne (MA) 50 mm oder weniger oberhalb des Faser-Kunststoff-Verbundwerkstoffes (FKV) platziert wird. Durch dieses Verfahren wird ein elektrischer Strom senkrecht zu den Lagen induziert.

Faser-Kunststoff-Verbundwerkstoffes (FKV) sind hinlänglich bekannt. Dabei werden Kohlenstofffasern (F) als Verstärkung in die Kunststoffmatrix (M) eingebaut. Vorzugsweise weist ein Faser-Kunststoff-Verbundwerkstoff (FKV) mehrere Lagen aus Kohlenstofffasern (F) auf. Die Anzahl der Lagen (L) hängt von den zu erstellenden Bauteilen ab. In der Regel weist ein Faser-Kunststoff-Verbundwerkstoff (FKV), wie zum Beispiel im Prepregs, 1 bis 200, insbesondere 10 bis 100, Lagen (L) auf. Vorzugsweise sind diese Lagen (L) parallel, insbesondere planparallel, zueinander ausgerichtet, wobei es zur Erhöhung der Steifigkeit des Faser-Kunststoff-Verbundwerkstoffes (FKV) wünschenswert ist wenn die Lagen (L) so zueinander angelegt sind, dass die Kohlenstofffasern (F) der einzelnen Lagen (L) quer zueinander verlaufen. Darüber hinaus kann eine Lage (L) nicht nur aus parallelen Kohlenstofffasern (F) bestehen sondern aus einem Kohlenstofffasergewebe in dem Kohlenstofffasern (F) nicht nur parallel sondern auch orthogonal zueinander verlaufen. Die Dicke der einzelnen Lagen ergibt sich maßgeblich aus dem Durchmesser der Kohlenstofffasern (F).

Bezüglich der Kunststoffmatrix (K) können unterschiedlichste Polymere zum Einsatz kommen. Vorzugsweise handelt es sich um Duroplasten, Thermoplasten oder Mischungen aus Duroplasten und Thermoplasten.

Duroplasten werden vorzugsweise ausgewählt aus der Gruppe bestehend aus Epoxiden, Polyestern, Polyurethanen, und Phenole. Thermoplasten hingegen werden vorzugsweise ausgewählt aus der Gruppe der technischen Thermoplasten bestehend aus Polyamid, Polyetherketon, Polyimid, Polysulfon, Polyethersulfon und Polyester. In einer besonderen Ausführungsform umfasst die Kunststoffmatrix (K), insbesondere besteht die Kunststoffmatrix (K) aus, einem Thermoplasten, wie Polyetheretherketon Polyetherketone und/oder Polyamid.

Bei den Kohlenstofffasern (K), die in der vorliegenden Erfindung verwendet werden, handelt es sich um konventionelle Kohlenstofffasern (K). Kohlenstofffasern (K) sind industriell hergestellte Fasern aus kohlenstoffhaltigen Ausgangsmaterialien, wie Cellulose, Polyacrylnitril oder Pech, die durch Pyrolyse in graphitartig angeordneten Kohlenstoff umgewandelt werden. In vorliegender Anmeldung kommen insbesondere anisotrope Typen zum Einsatz.

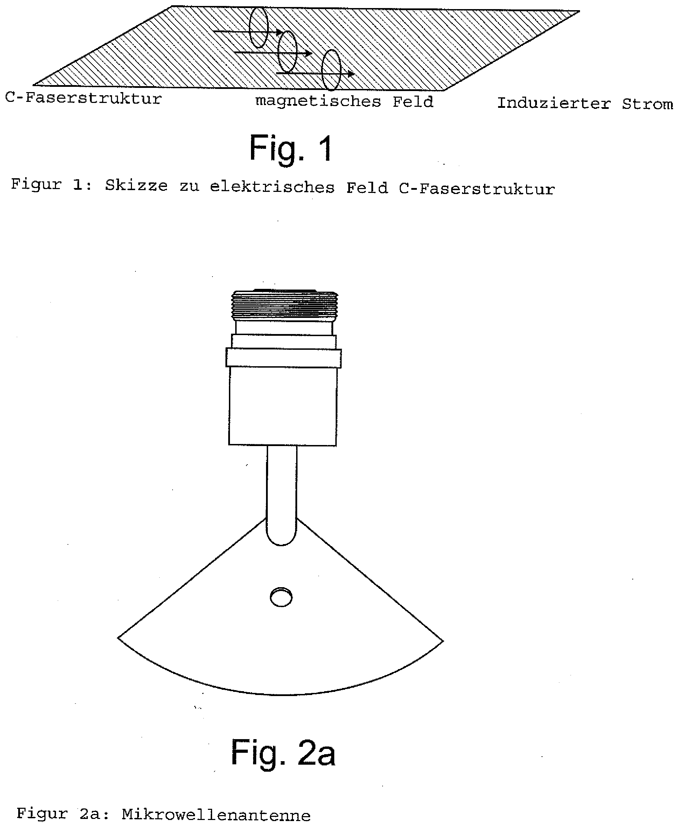

Wesentlicher Aspekt vorliegender Anmeldung ist es, dass für die Erwärmung eines Faser-Kunststoff-Verbundwerkstoff (FKV) ein magnetisches Feld (MF), d.h. eine magnetische Feldrichtung, erzeugt wird, das in der Ebene zumindest einer der Lagen (L) des zu erwärmenden Faser-Kunststoff-Verbundwerkstoffes (FKV) verläuft (siehe Figur 1).

Unter Erwärmung nach vorliegender Erfindung wird insbesondere verstanden, dass der Faser-Kunststoff-Verbundwerkstoff (FKV), vornehmlich die Kunststoffmatrix (K), bei Hochleistungsthermoplasten auf 500 °C, insbesondere 400 °C, und bei duroplastischen Polymeren bevorzugter Weise auf 50 bis 400 °C, wie 100 bis 250 °C, erwärmt wird

Der Ausdruck "in der Ebene" gibt vorzugsweise wieder, dass das magnetische Feld (MF), d.h. die magnetische Feldrichtung, lateral zu den Kohlenstofffasern (K) der Lage (L), d.h. in der Ebene der Lage (L) verläuft.

Besonders bevorzugt ist, dass der Faser-Kunststoff-Verbundwerkstoff (FKV) nur einer magnetischen Feldrichtung (Feldmode) ausgesetzt ist und nicht, wie bei herkömmlichen Prozessen, mehreren magnetischen (und auch elektrischen) Feldrichtungen, die insbesondere durch Reflexionen an der Ofenwand eintreten. Folglich ist es bevorzugt, dass das Verfahren in einem (geschlossenen) System durchgeführt wird, das vornehmlich so dimensioniert wird, dass Reflexionen vernachlässigt werden können. Folglich beträgt die Höhe, Länge und Tiefe dieses System mindestens 5 λ, bevorzugt mindestens 8 λ, der eingestrahlten elektromagnetischen Welle, d.h. des magnetischen Feldes (MF). Denkbar ist auch, dass die Wände des Systems so gestaltet werden, dass eine Reflexion von magnetischen (und elektrischen) Wellen vermieden wird. Denkbare Materialien dafür sind mikrowellenabsorbierende Materialien, wie beispielsweise kohlenstoffhaltige Polymere, wasserhaltige Materialien etc.

Der Vorteil des ausgerichteten magnetischen Feldes (MF) ist es, dass ausschließlich ein elektrischer Strom (ES) orthogonal zur Ebene der Lage (L) aus Kohlenstofffasern (F) verläuft und damit in das Innere des Faser-Kunststoff-Verbundwerkstoffes (FKV).

Besonders günstig hat es sich erwiesen, dass die Mikrowellenantenne (MA) nahe an den zu erwärmenden Faser-Kunststoff-Verbundwerkstoff (FKV) herangeführt wird. Folglich ist es bevorzugt, dass die Mikrowellenantenne (MA) während des Erwärmens 50 mm oder weniger (z.B. 0.5 bis 50 mm), insbesondere 10 mm oder weniger(z.B. 0.5 bis 10 mm), wie 1 bis 10 mm, oberhalb des Faser-Kunststoff-Verbundwerkstoffes (FKV) platziert wird.

Durch die Nähe der Mikrowellenantenne (MA) zum Faser-Kunststoff-Verbundwerkstoff (FKV) bilden unter elektrodynamischen Gesichtspunkten die Mikrowellenantenne (MA) und zumindest eine Lage (L) aus Kohlenstofffasern (F) ein gemeinsames System, das auch so betrachtet werden muss, d.h. die Kohlenstofffaserstruktur beeinflusst ganz entscheidend die Feldausrichtung.

Das magnetische Feld (MF) der Mikrowelle hat vorzugsweise eine Freiraumwellenlänge λ von 0,1 cm bis 100,0 cm, vorzugsweise von 3,0 cm bis 30,0 cm.

Es hat sich herausgestellt, dass das oben beschriebene Verfahren insbesondere mit einer neuartigen Mikrowellenantenne (MA) durchgeführt werden kann.

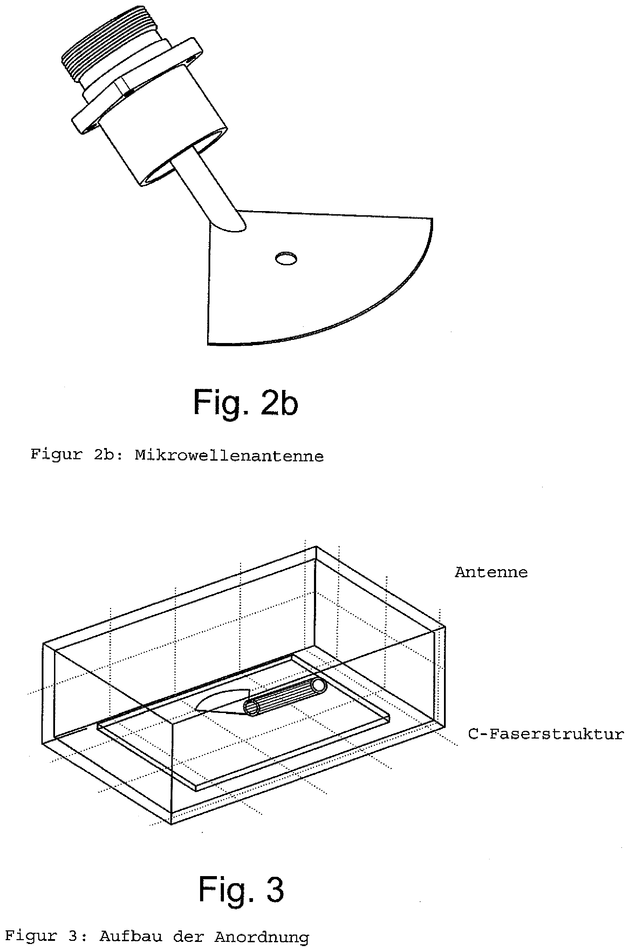

Diese Mikrowellenantenne (MA) umfasst vorzugsweise einen Schaft (S) und eine ebene Metallfläche (MF), wobei
(a) der Schaft (S) einen Innenleiter (IL) und einen Außenleiter (AL) umfasst, wobei der Innenleiter (IL) und der Außenleiter (AL) durch ein Dielektrikum (D) getrennt sind und Innenleiter (IL) und Außenleiter (AL) koaxial zueinander verlaufen,
(b) die Metallfläche (MF) die Form eines Kreissektors (KS) mit einem Winkel von 1° bis 180° und einem Radius von 0,1 cm bis 60,0 cm aufweist,
(c) ein Ende des Innenleiters (IL) mit der Spitzes der Metallfläche (MF) verbunden ist, die dem Winkel von 1° bis 180° zuzuordnen ist, wobei der Innenleiter (IL) mit der Ebene der Metallfläche (MF) einen Winkel zwischen 0° und 180° bildet (siehe Figuren 2a, 2b, 3a und 3b).

Zum genaueren Verständnis der Mikrowellenantenne (MA) in ihrer bevorzugten Ausführungsformen wird ausdrücklich auf die Figuren 2a, 2b, 3a und 3b verwiesen.

Vorzugsweise ist der Schaft (S) rund mit einem Durchmesser von 10 bis 150 mm, vorzugsweise von 20 bis 60 nm, insbesondere von 25 bis 35 mm, wie 32 mm Die Länge des Schaftes (S) beträgt in einer bevorzugten Ausführungsform mindestens 30 mm.

Der Innenleiter (IL) hat vorzugsweise einen Durchmesser von 2 mm bis 60 mm, insbesondere 2 mm bis 20 mm, wie 5 mm bis 10 mm, insbesondere bevorzugt 8 mm.

Das Dielektrikum (D) ist vorzugsweise Luft.

Besonders gute Ergebnisse werden erzielt, wenn das Schaftende, welches mit der Metallfläche (MF) verbunden ist, nur den Innenleiter (IL) aufweist. Die Länge des Schaftabschnittes, welcher nur den Innenleiter (IL) aufweist, ergibt sich aus der zu erzeugenden elektromagnetischen Welle. Folglich ist es bevorzugt, dass der Schaft (S) λ/2 bis λ/6, insbesondere λ/3 bis λ/5, wie λ/4, vor dem Schaftende, welches mit der Metallfläche (MF) verbunden ist, nur den Innenleiter (IL) aufweist, wobei "λ" die Wellenlänge der Mikrowelle mit einer Länge von 0,1 cm bis 100 cm, vorzugsweise von 3,0 cm bis 30,0 cm, ist. Demnach ist es bevorzugt, dass der Schaft (S) 0,1 cm bis 25,0 cm, insbesondere 0,5 bis 15,0 cm, vor dem Schaftende, welches mit der Metallfläche (MF) verbunden ist, nur den Innenleiter (IL) aufweist.

Das zweite wesentliche Strukturmerkmal der Mikrowellenantenne (MA) ist die ebene Metallfläche (MF). Diese ebene Metallfläche (MF) weist vorzugsweise die Form eines Kreissektors (KS) mit
(a) einem Winkel von 1° bis 180°, vorzugsweise von 70° bis 120°, insbesondere von 80° bis 100°, wie 90° und/oder
(b) einem Radius von 0,1 cm bis 60,0 cm, vorzugsweise von 0,2 cm bis 60,0 cm, insbesondere von 1,0 cm bis 20,0 cm auf.

Der Radius ergibt sich vorzugsweise aus der Wellenlänge der Mikrowelle. Folglich ist es bevorzugt, dass die Metallfläche (MF) in Form eines Kreissektors (KS) einen Radius von λ/1,8 bis λ/2,2, vorzugsweise von λ/1,9 bis λ/2, wie λ/2,0, hat.

In einer besonderen Ausführungsform weist die ebene Metallfläche (MF) ein kreisförmiges Loch auf. Dieses Loch hat vorzugsweise einen Durchmesser von 1 bis 20 mm, wie von 5 bis 10 mm.

Das kreisförmige Loch befindet sich vorzugsweise in der Mitte des Kreissektors.

Die Dicke der ebenen Metallfläche (MF) liegt vorzugsweise im Bereich vom 0,1 bis 10 mm, wie 0,2 bis 2 mm.

In einer bevorzugten Ausführungsform umfasst, insbesondere besteht, die Metallfläche aus leitfähigen Materialien wie Metall (Kupfer, Aluminium, Messing, Edelstahl) oder Graphit.

Weiterhin muss das eine Ende des Innenleiters (IL) mit der Spitze (Scheitelpunkt) der Metallfläche (MF) verbunden sein. D.h. das eine Ende des Innenleiters (IL) ist mit der Spitze der Metallfläche (MF) verbunden, die dem Winkel von 1° bis 180° zuzuordnen ist. Dabei ist der Innenleiter (und damit der Schaft) vorzugsweise fest mit der Metallfläche (MF) verbunden. Vorzugsweise beschreibt der Innenleiter (IL) mit der Ebene der Metallfläche (MF) einen Winkel zwischen 0° und 180°, vorzugsweise zwischen 10° und 90°, insbesondere zwischen 25° und 55°. In einer besonderen Ausführungsform beträgt der Winkel zwischen 30° bis 40°.

Das beschriebene Verfahren umfasst die Erwärmung von jeglichen Kunststoff, insbesondere duro- und/oder thermoplastischen Polymeren, die mit Kohlenstofffasern verstärkt sind, und alle damit verbundenen Prozesse. So kann auch die konventionelle Autoclave-Technologie mit solch einem Verfahren und solch einer Mikrowellenantenne (MA) betrieben werden, um in kurzer Zeit und energieeffizient die Struktur zu heizen. Das beschriebene Verfahren und die Mikrowellenantenne (MA) sind insbesondere einsetzbar bei sogenannten Tapelegeprozessen. Bei diesen Prozessen kann die Erfindung genutzt werden, um direkt nach Ablegen des Tapes das Polymer zu erwärmen und/oder auszuhärten. Des Weiteren kann das erfindungsgemäße Verfahren und/oder die Mikrowellenantenne (MA) eingesetzt werden um die gesamte Kohlenstofffaser verstärkte Struktur nach dem Legen komplett zu konsolidieren.

### BEISPIELE

Es wurden Versuche zur Erwärmung von Kohlenstofffaserstrukturen mit Polyetheretherketon Matrix (PEEK) durchgeführt. Der Faser-Kunststoff-Verbundwerkstoff enthielt 32 Lagen unidirektionaler Kohlenstofffaserstrukturen in beliebiger Orientierung geschichtet. Er wurde mit der in Figuren 2a und 2b abgebildeten Antenne (ausgelegt für 2,45 GHz, d.h. einer Wellenlänge von etwa 12cm) auf eine Temperatur von 400°C erwärmt. Dazu war eine Leistung von etwa 400 W und eine Bestrahlungszeit von wenigen Sekunden (<5s) notwendig. Der Abstand Antenne mit Kohlenstofffaserstruktur betrug während der Erwärmung 5 mm. (siehe Figur 3)

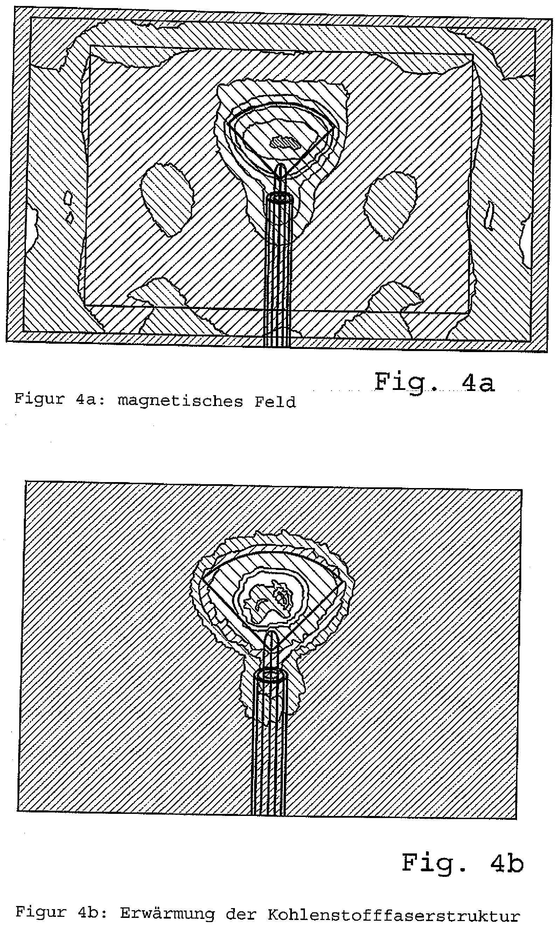

Die Figur 4a zeigt das auftretende magnetische Feld und Figur 4b die daraus folgende ohmsche Erwärmung. Beide Figuren stimmen sehr gut überein, d.h. Bereiche hoher magnetischer Feldstärke ergeben eine starke Erwärmung.

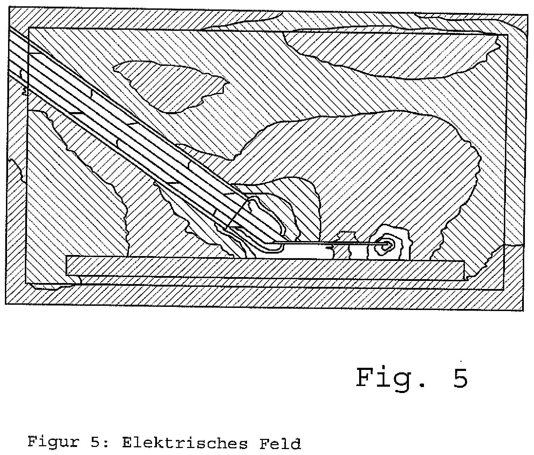

Figur 5 zeigt das dazugehörige elektrische Feld. Das elektrische Feld ist am höchsten beim Übergang koaxiale Zuleitung Metallfläche und sehr klein in dem Bereich in dem die Kohlenstofffaserstruktur erwärmt wird, d.h. das magnetische und nicht das elektrische Feld heizt die Kohlenstofffaserstruktur und damit den gesamten Faser-Kunststoff-Verbundwerkstoff auf.

## Patentansprüche

1. Verfahren zur Erwärmung eines Faser-Kunststoff-Verbundwerkstoffes (FKV) umfassend mindestens eine Lage (L) aus Kohlenstofffasern (F) in einer Kunststoffmatrix (K), wobei mittels Mikrowellenantenne (MA) ein magnetisches Feld (MF) induziert wird und die Feldrichtung des magnetischen Feldes (MF) in der Ebene der Lage (L) aus Kohlenstofffasern (F) verläuft. **dadurch gekennzeichnet. dass** die Mikrowellenantenne (MA) 50 mm oder weniger oberhalb des Faser-Kunststoff-Verbundwerkstoffes (FKV) platziert wird.

2. Verfahren nach Anspruch 1, **dadurch gekennzeichnet, dass** nur eine magnetische Feldrichtung während der Erwärmung des Faser-Kunststoff-Verbundwerkstoffes (FKV) vorliegt und diese in der Ebene der Lage (L) aus Kohlenstofffasern (F) verläuft.

3. Verfahren nach Anspruch 1 oder 2, **dadurch gekennzeichnet, dass** der induzierte elektrische Strom (ES) orthogonal zur Ebene der Lage (L) aus Kohlenstofffasern (F) verläuft.

4. Verfahren nach einem der vorhergehenden Ansprüche, **dadurch gekennzeichnet, dass** die Kunststoffmatrix (K) ein Duroplast und/oder ein Thermoplast ist/sind.

5. Verfahren nach einem der vorhergehenden Ansprüche, **dadurch gekennzeichnet, dass** die Mikrowellenantenne (MA) einen Schaft (S) und eine ebene Metallfläche (MF) umfasst, wobei
(a) der Schaft (S) einen Innenleiter (IL) und einen Außenleiter (AL) umfasst, wobei der Innenleiter (IL) und der Außenleiter (AL) durch ein Dielektrikum (D) getrennt sind und Innenleiter (IL) und Außenleiter (AL) koaxial zueinander verlaufen,
(b) die Metallfläche (MF) die Form eines Kreissektors (KS) mit einem Winkel von 1° bis 180° und einem Radius von 1 cm bis 60,0 cm aufweist.
(c) ein Ende des Innenleiters (IL) mit der Spitze der Metallfläche (MF) verbunden ist, die dem Winkel von 1° bis 180° zuzuordnen ist, wobei der Innenleiter (IL) mit der Ebene der Metallfläche (MF) einen Winkel zwischen 0° und 180° bildet.

6. Verfahren nach Anspruch 5, wobei der Schaft (S) 0,1 cm bis 25,0 cm vor dem Schaftende, welches mit der Metallfläche (MF) verbunden ist, nur den Innenleiter (IL) aufweist.

7. Verfahren nach Anspruch 5 oder 6, wobei die Metallfläche (MF) ein elektrisch leitfähiges Material, vorzugsweise Kupfer, Messing, Bronze, Aluminium, und/oder Edelstahl, umfasst.

8. Verfahren nach einem der Ansprüche 5 bis 7, wobei
(a) der Radius λ/1,8 bis λ/2,2 ist und/oder
(b) der Schaft (S) λ/2 bis λ/6 vor dem Schaftende, welches mit der Metallfläche (MF) verbunden ist, nur den Innenleiter (IL) aufweist, wobei "λ" die Wellenlänge der Mikrowelle mit einer Länge von 0,1 cm bis 100 cm ist.

## Claims

1. Method for heating a fibre-plastics composite material (FKV), the latter comprising at least one layer (L) of carbon fibres (F) in a plastics matrix (K), wherein a magnetic field (MF) is initiated by means of a microwave antenna (MA) and the field direction of the magnetic field (MF) runs in the plane of the layer (L) of carbon fibres, **characterized in that** the microwave antenna (MA) is placed 50 mm or less above the fibre-plastics composite material (FKV).

2. Method according to Claim 1, **characterized in that** only one magnetic field direction is present during heating of the fibre-plastics composite material (FKV), said one magnetic field direction running in the plane of the layer (L) of carbon fibres (F).

3. Method according to Claim 1 or 2, **characterized in that** the initiated electric current (ES) runs so as to be orthogonal to the plane of the layer (L) of carbon fibres (F).

4. Method according to one of the preceding claims, **characterized in that** the plastics matrix (M) is a thermosetting plastics material and/or a thermoplastic material.

5. Method according to one of the preceding claims, **characterized in that** the microwave antenna (MA) comprises a shaft (S) and a level metal face (MF), wherein
a) the shaft (S) comprises an internal conductor (IL) and an external conductor (AL), wherein the internal conductor (IL) and the external conductor (AL) are separated by a dielectric (D), and the internal conductor (IL) and the external conductor (AL) run in a mutually coaxial manner,
b) the metal face (MF) has the shape of a circular segment (KS) having an angle of 1° to 180° , and a radius of 1 cm to 60.0 cm,
c) one end of the internal conductor (IL) is connected to the tip of the metal face (MF) which tip is to be assigned to the angle of 1° to 180°, wherein the internal conductor (IL) with the plane of the metal face (MF) forms an angle between 0° to 180°.

6. Method according to Claim 5, wherein the shaft (S), 0.1 cm to 25.0 cm before the shaft end which is connected to the metal face (MF), only has the internal conductor (IL).

7. Method according to Claim 5 or 6, wherein the metal face (MF) comprises an electrically conductive material, preferably copper, brass, bronze, aluminium, and/or stainless steel.

8. Method according to one of Claims 5 to 7, wherein
a) the radius is λ/1.8 to λ/2.2
and/or
b) the shaft (S), λ/2 to λ/6 before the shaft end which is connected to the metal face (MF), only has the internal conductor (IL),
wherein "λ" is the wavelength of the microwave having a length of 0.1 cm to 100 cm.

## Revendications

1. Procédé pour échauffer un matériau composite en fibres et plastique (FKV) comprenant au moins une couche (L) de fibres de carbone (F) dans une matrice de matière plastique (K), un champ magnétique (MF) étant induit au moyen d'une antenne à hyperfréquence (MA) et la direction du champ magnétique (MF) s'étendant dans le plan de la couche (L) de fibres de carbone (F), **caractérisé en ce que** l'antenne à hyperfréquence (MA) est placée à 50 mm ou moins au-dessus du matériau composite en fibres et plastique (FKV).

2. Procédé selon la revendication 1, **caractérisé en ce qu'**une seule direction du champ magnétique est présente pendant l'échauffement du matériau composite en fibres et plastique (FKV) et celle-ci s'étend dans le plan de la couche (L) de fibres de carbone (F).

3. Procédé selon la revendication 1 ou 2, **caractérisé en ce que** le courant électrique (ES) induit circule de manière orthogonale par rapport au plan de la couche (L) de fibres de carbone (F).

4. Procédé selon l'une des revendications précédentes, **caractérisé en ce que** la matrice de matière plastique (K) est une résine thermodurcissable et/ou une matière thermoplastique.

5. Procédé selon l'une des revendications précédentes, **caractérisé en ce que** l'antenne à hyperfréquence (MA) comprend une tige (S) et une surface métallique (MF) plane,
(a) la tige (S) comprenant un conducteur interne (IL) et un conducteur externe (AL), le conducteur interne (IL) et le conducteur externe (AL) étant séparés par un diélectrique (D) et le conducteur interne (IL) et le conducteur externe (AL) s'étendant de manière coaxiale l'un par rapport à l'autre,
(b) la surface métallique (MF) possédant la forme d'un secteur de cercle (KS) avec un angle de 1° à 180° et un rayon de 1 cm à 60,0 cm,
(c) une extrémité du conducteur interne (IL) étant reliée à la pointe de la surface métallique (MF) qui est associée à l'angle de 1° à 180°, le conducteur interne (IL) formant avec le plan de la surface métallique (MF) un angle entre 0° et 180°.

6. Procédé selon la revendication 5, la tige (S) ne possédant que le conducteur interne (IL) sur une longueur de 0,1 cm à 25,0 cm avant l'extrémité de la tige qui est reliée à la surface métallique (MF).

7. Procédé selon la revendication 5 ou 6, la surface métallique (MF) comprenant un matériau électriquement conducteur, de préférence du cuivre, du laiton, du bronze, de l'aluminium et/ou de l'acier inoxydable.

8. Procédé selon l'une des revendications 5 à 7,
(a) le rayon ayant une valeur de λ/1,8 à λ/2,2 et/ou
(b) la tige (S) ne possédant que le conducteur interne (IL) sur une longueur de λ/2 à λ/6 avant l'extrémité de la tige qui est reliée à la surface métallique (MF), « λ » désignant la longueur d'onde des hyperfréquences avec une longueur de 0,1 cm à 100 cm.
